# EUROPEAN PATENT APPLICATION

(11) **EP 2 017 976 A1**
(43) Date of publication of application: **21.01.2009**
(21) Application number: 07720823.9
(22) Date of filing: 17.04.2007
(51) Int. Cl.: H04B 7/15

(54) **METHOD AND APPARATUS FOR JOINT-RELAYING IN WIRELESS COMMUNICATION NETWORKS**

(30) Priority: 29.04.2006 CN 200610026260
(71) Applicant: Alcatel Lucent, 75008 Paris (FR)
(72) Inventor: NI, Wei, Shanghai 201206 (CN); SHEN, Gang, Shanghai 201206 (CN); WANG, Feng, Shanghai 201206 (CN); JIN, Shan, Shanghai 201206 (CN)
(74) Representative: Kohler Schmid Möbus
(86) International application number: PCT/CN2007/001250
(87) International publication number: WO 2007/124670

(57) **Abstract**

The invention provides a method and device for cooperative relay with multiple relay stations in the wireless telecommunication network. The invention is proposed to improve the quality of relayed signals, reduce the resources needed for relaying and solve the problems when performing the switch between relay devices. The method and device according to the invention are **characterized in that,** the received signals are processed according to the indicating information from a BS, before sending them to the next level network nodes. Compared with the prior art, the present invention can achieve better spatial diversity gain or spatial multiplexing gain, even both of them. Further, the present invention does not require a high level synchronization. Therefore, the performance of the signals received can be considerably improved, the resources needed for relaying are also reduced. Further, the present invention is very practical.

## Description

### Field of the Invention

The present invention relates to the telecommunication network, and particularly to the relay device, base station and method for implementing the cooperative relay with multiple relay devices.

### Background of the Invention

Cooperative relay, as an emerging technology in the field of wireless telecommunication, has the basic idea of obtaining diversity effect via independent channels. In the cooperative relay network, the source node broadcasts the signals that it needs to transmit, and part of the relay devices deployed in the network can receive these signals, and consequently process and forward the signals. In multi-relay network, the signals forwarded by said relay devices will reach relay devices on the next hop, these relay devices will process and forward the signals again, at last, said signals reach the destination ( the signal destination ).

As a brand new field, the cooperative relay has limited solutions. As the cooperative relay needs to combine the signals from different relay stations, many solutions for cooperative relay require accurate synchronization and power match, which set high requirements for the real implementation of the system. Other solutions require specific channel conditions, such as the orthogonality between the channels, which increase the difficulty for design and measurement. In addition, the improvement of the performance obtained by cooperative relay is also subject to the channel condition.

### Summary of the Invention

The object of the invention is to provide a relay device, base station and method for implementing the cooperative relay with multiple relay devices.

According to the first aspect of the invention, there is provided a method, in a relay device in wireless telecommunication network, for performing the cooperative relay, comprising the steps of: receiving the signals from the fore level network nodes; according to the indicating information from a base station , determining the situation of the fore level network nodes and/or the next level network nodes,; according to the determination result, performing normal relay process or cooperative relay process on said signals from the fore level network nodes, so as to generate the signals after relay process; sending the signals after relay process to the next level network nodes.

According to the second aspect of the invention, there is provided a relay device in wireless telecommunication network, for performing the cooperative relay, comprising: receiving means, for receiving the signals from the fore level network nodes; determining means, for according to the indicating information from a base station, determining the situations of the fore level network nodes and/or the next level network nodes; relay processing means for, according to the determination result, performing the normal relay process or cooperative relay process on the signals from the fore level network nodes, so as to generate the signals after relay process; sending means, for sending the signals after relay process to the next level network nodes.

According to the third aspect of the invention, there is provided a method, in the base station in wireless network, for supporting the cooperative relay with multiple relay devices, characterized in comprising the step of: performing cooperative detection and combination process on the branches of signals received from multiple relay devices, to generate a signal sequence after cooperative detection and combination process.

According to the fourth aspect of the invention, there is provided a base station in wireless network, for supporting the cooperative relay with multiple relay devices, characterized in comprising: a detecting and combining means, for performing cooperative detection and combination process on the branches of signals received from multiple relay devices, to generate a signal sequence after cooperative detection and combination process.

With the method and the corresponding device provided by the present invention, space diversity gain or space multiplexing gain, even both of them, can be obtained effectively. Therefore, the performance of the signals received or the consumption of relay resources can be improved considerably.

### Brief Description of the Drawings

Further description of the invention is given as below referring to the figures.
Fig. 1 shows the topology of a multi-hop cooperative relay network and the corresponding frame structure according to an embodiment of the invention;
Fig. 2 shows the flowchart of the method, in a relay device, for implementing the cooperative relay in different circumstances according to an embodiment of the invention;
Fig. 3 shows the flowchart of the relay process in the method for cooperative relay in a relay device according to an embodiment of the invention, wherein, its fore level network node is a base station, while the next level network node is a mobile station;
Fig. 4 shows the flowchart of the relay process in the method for cooperative relay in a relay device according to an embodiment of the invention, wherein, its fore level network node is a base station or a mobile station, while the next level network nodes are multiple relay devices;
Fig. 5 shows the flowchart of the relay process in the method for cooperative relay in a relay device according to an embodiment of the invention, wherein, its fore level network nodes are multiple relay devices, while the next level network nodes consist in multiple relay devices or a base station;
Fig. 6 shows the flowchart of the relay process in the method for cooperative relay in a relay device according to an embodiment of the invention, wherein, its fore level network nodes are multiple relay devices, while the next level network node is a mobile station;
Fig. 7 is the diagram of the relay device for cooperative relay according to an embodiment of the invention;
Fig. 8 shows the flowchart of the method, in the base station in wireless network, for supporting the cooperative relay with multiple relay devices, according to an embodiment of the invention;
Fig. 9 is the diagram of the base station in wireless network for supporting the cooperative relay with multiple relay devices, according to an embodiment of the invention;
Fig. 10 shows the process before a relay device sending signals on the uplink according to an embodiment of the invention;
Fig. 11a and 11b show the course of, in the relay device or base station, processing the signals from multiple relay devices, according to an embodiment of the invention.

### Detailed description of embodiments

Detailed description of the invention is given as below with the combination of the figures.

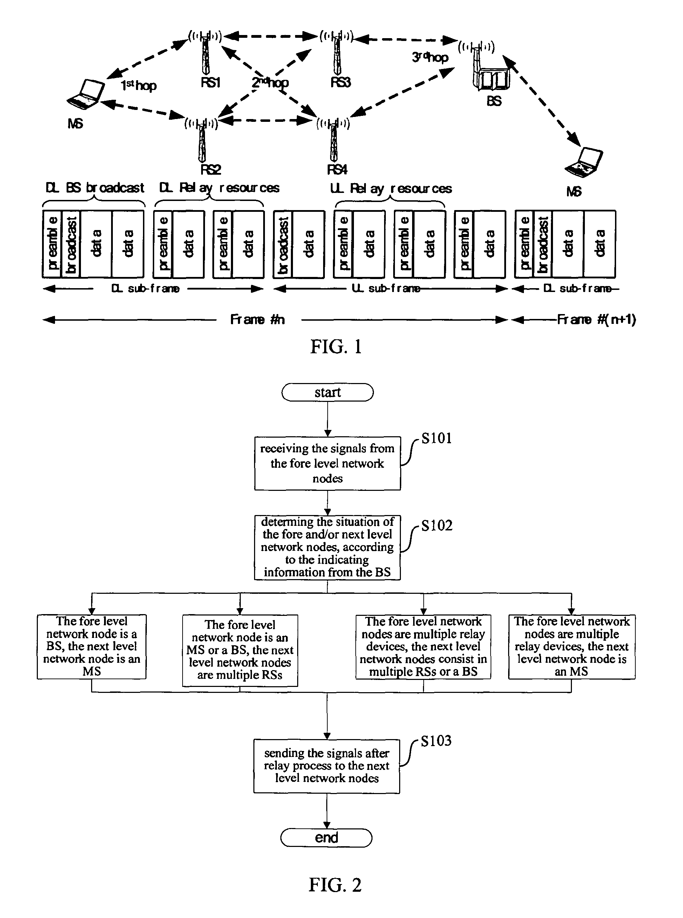

Fig. 1 shows the topology of a multi-hop cooperative relay network and the corresponding frame structure according to an embodiment of the invention.

As shown in the upper part of Fig. 1, the multi-hop cooperative relay network comprises a base station (BS), multiple relay devices (relay stations, RS1-RS4) and multiple mobile stations (MS, i.e. user equipment such as mobile phone). Wherein, since one MS is near to the BS and can communicate with the BS directly, (the quality of the signals from the MS is good enough when arriving at the BS), hence no relay is needed. However, the present invention mainly concerns the communication issues when relay is necessary between MS and BS, therefore, the description will mostly focus on the MSs which need relay.

Without loss of generality, uplink is taken as an example. MS sends signals to the next level network nodes (RS1 and RS2 in Fig. 1), before this, both RS1 and RS2 have got indicating information (such as the MAP information broadcasted by the BS on the downlink)from the BS directly or indirectly (forwarded by fore level relay devices level by level). Preferably, the indicating information comprises the link structure of the network, from which the relay device knows the situation of its fore level network nodes and next level network nodes. More preferably, the indicating information further comprises the specific information sequence processing method of each network node for processing its signals to be sent. After receiving the indicating information from the base station, the network nodes in adjacent network levels, such as RS1, RS2 in one level and RS3 and RS4 in another level, can learn the specific information sequence processing method of each other, so as to perform corresponding process on the information from the other party. The detailed course thereof will be described referring to other drawings in below.

Therefore, when the signals sent by MS arrive at RS 1 and RS2, the two relay devices independently process the signals received and forward the processed signals respectively. Wherein, according to the different situation of the fore and next level network nodes of the relay devices, the relay processes will be different. The signals after relay processing and sent by RS1 and RS2 arrive at RS3 and RS4 via the second hop. Similarly, RS3 and RS4 have already got indicating information from the BS directly or indirectly (forwarded by fore level relay devices level by level).According to this indicating information, RS3 and RS4 independently perform relay process on their received signals and then forward the processed signals respectively. Through the third hop, the signals arrive at the BS at last. The BS then performs corresponding process on the signals from RS3 and RS4, such as cooperative detection and combination, so as to retrieve the original signals sent by the MS.

It should be noted that, according to some standard such as IEEE802.16, the introduction of relay devices is transparent to the MSs, that is to say, MSs are not aware of the RSs. Therefore, in downlinks, RS 1 and RS2, whose next network node is an MS, should convert the format of the signals to be sent correspondingly, so that the MS can receive and identify the signals successfully. Preferably, the format after the conversion is that of the signals that a BS sends to MSs before the introduction of any RS.

The lower part of Fig.1 shows the frame structure according to an embodiment of the invention. Wherein, the BS allocates wireless resources (e.g. time and frequency resources) to the network nodes on different levels of the network. Preferably, network nodes on the same level such as RS 1 and RS2 can share the same network resources.

Fig. 2 shows the flowchart of the method, in a relay device, for implementing the cooperative relay in different circumstances according to an embodiment of the invention;

A cooperative relay network can be a single-hop network which has only one level of relay devices, or a multi-hop network which has two or more levels of relay devices. In Fig. 2, as shown in the step S101, the relay device receives the signals from its fore level network nodes; then in the step S102, according to the indicating information from the base station, the relay device determines the situation of its fore or next level network nodes. With respect to different situation of fore or next level network nodes, there are four kinds of relay processes at the relay device:

### 1. The fore level network node is a base station, the next level network node is a mobile station.

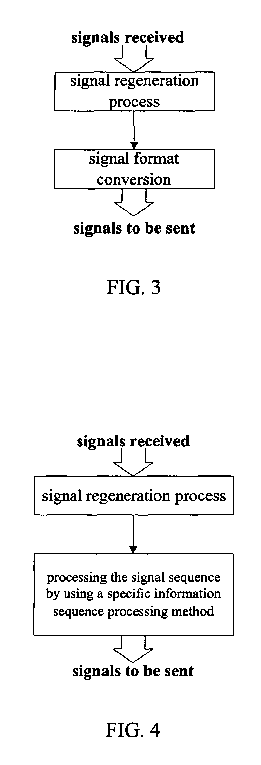

The specific relay process in this situation is shown in Fig. 3, and corresponds to the transmission of downlink signals with single-hop relay. This kind of relay process is also called normal relay process. The received signals are processed by using a processing method similar as the one in single-hop scheme in the prior art (saying, doing the normal relay process). Specifically, signal regeneration process are performed on the received signals, and a signal sequence after signal regeneration are generated; then, the signal format of the signal sequence after signal regeneration will be converted, so as to generate a signal sequence after signal format conversion. This is to satisfy the requirements of some standard so that the MSs will not sense the RSs. Preferably, the format of the signal sequence after the conversion is the same as that of the signals that a BS sends to MSs before the introduction of any RS.

### 2. The fore level network node is a BS or an MS, the next level network node are multiple relay devices.

The specific relay process in this situation is shown in Fig. 4, and corresponds to the relay device on the first hop in downlink or uplink of the multi-hop relay network. Since its fore level network nodes is determined as an MS or a BS, and according to an embodiment of the invention, the MS or BS will send signals according to the method for the direct communication between a BS and an MS in the prior art, hence, after receiving the signals (the original signals from the signal source), the relay device will perform cooperative relay process on them. Specifically, the relay device performs signal regeneration process on the original signals from the fore level network node, so as to generate a signal sequence after signal regeneration. And then, by using a specific information sequence processing method such as a specific bit-level interleaving method or scrambling method that differentiates from those of other relay devices, the signal sequence after signal regeneration is processed.

### 3. The fore level network nodes are multiple relay devices, the next network nodes consist in multiple relay devices or a BS.

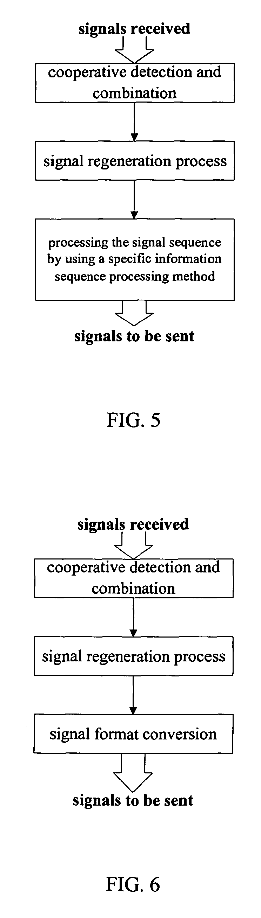

The specific relay process in this situation is shown in Fig. 5, and corresponds to the relay devices on any interim hop in the downlink or uplink, or to the relay devices on the last hop in the uplink of the multi-hop relay network. According to the present invention, the signals sent from a relay device to other relay devices have undergone "processing using a specific information sequence processing method". Hence, after receiving each branch of signal sequence from other relay devices, the relay device will perform cooperative detection and combination on the arrived branches of signal sequences, so as to generate a branch of signal sequence after cooperative detection and combination. Then, the relay station will perform signal regeneration process on the branch of signal sequence after cooperative detection and combination, so as to generate a signal sequence after signal regeneration. Consequently, the signal sequence after signal regeneration will be processed with a specific information sequence processing method.

### 4. The fore level network nodes are multiple relay devices, the next level network nodes is an MS.

The specific relay process in this situation is shown in Fig. 6. As said in the contents above, the introduction of a RS is transparent to an MS. Therefore, a relay station on the last hop in downlink of the multi-hop relay network should perform cooperative detection and combination on the branches of signal sequences arrived to generate one branch of signal sequence after cooperative detection and combination. Then, the relay device will perform signal regeneration process on the branch of signal sequence after cooperative detection and combination so as to generate a signal sequence after signal regeneration. Different from the previous situation, the relay device will not process the signal sequence with a specific information sequence processing method, but convert the format of the signal sequence to generate a signal sequence after signal format conversion. The format of the signal sequence after the conversion is the same as that of the signals that a BS sends to a MS before the introduction of any RS.

The relay processes in the aforesaid situations 2-4 can be collectively called cooperative relay process.

The signals after one of the aforesaid four kinds of relay processes will be sent by the corresponding relay device to its next level network nodes in the step S103.

Preferably, after receiving the signals from the fore level network nodes, the relay device does a check such as Cyclic Redundancy Check (CRC) to judge if it is necessary to do some follow-up process to the signals and then forward them. This will help to improve the signal processing efficiency of the system.

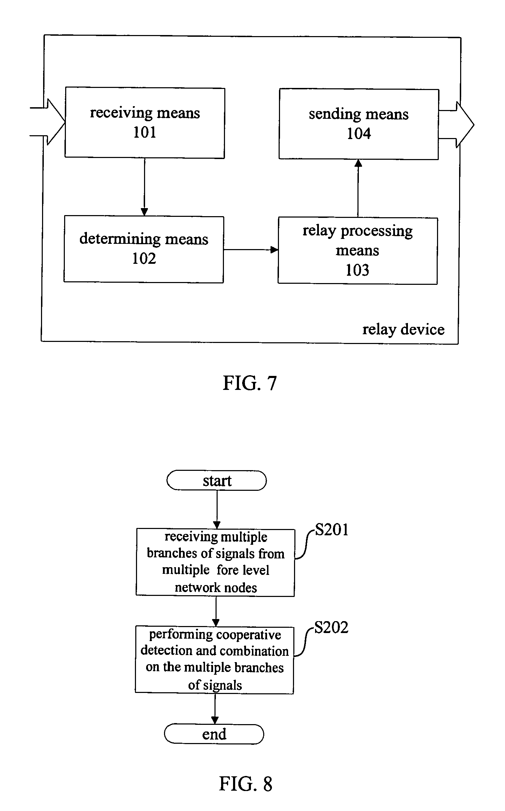

Fig. 7 is the diagram of the relay device for cooperative relay according to an embodiment of the invention.

The relay device comprises a receiving means 101, a determining means 102, a relay processing means 103 and a sending means 104.

The receiving means 101 is for receiving the signals from the fore level network nodes; and the determining means 102 is for, according to the indicating information from the BS, determining the situation of the fore or next level network nodes. With respect to different situation of the fore or next level network nodes, the relay processing means 103 in the relay devices is functioned as:

### 1. The fore level network node is a base station, the next level network node is a mobile station.

The situation corresponds to the transmission of downlink signals with single-hop relay, which is also called normal relay process. The signals received by the receiving means 101 are processed by the relay processing means 103 by using a processing method similar as the one in single-hop scheme in the prior art (saying, doing the normal relay process). Specifically, signal regeneration process are performed on the received signals, and a signal sequence after signal regeneration are generated; then, the format of the signal sequence after signal regeneration will be converted, so as to generate a signal sequence after format conversion. This is to satisfy the requirements of some standard so that the MSs will not sense the RSs. Preferably, the format of the signal sequence after the conversion is the same as that of the signals that a BS sends to MSs before the introduction of any RS.

### 2. The fore level network node is a BS or an MS, the next level network node are multiple relay devices.

The situation corresponds to the relay device on the first hop in downlink or uplink of the multi-hop relay network. Since its fore level network nodes is determined as an MS or a BS, and according to an embodiment of the invention, the MS or BS will send signals according to the method for the direct communication between a BS and an MS in the prior art, hence, after the receiving means 101 receives the signals(the original signals from the signal source), the relay processing means 103 will perform cooperative relay process on them. Specifically, the relay device performs signal regeneration process on the original signals from the fore level network node, so as to generate a signal sequence after signal regeneration. And then, by using a specific information sequence processing method such as a specific bit-level interleaving method or scrambling method that differentiates from those of other relay devices" the signal sequence after signal regeneration is processed.

### 3. The fore level network nodes are multiple relay devices, the next network node(s) consist in multiple relay devices or a BS.

The situation corresponds to the relay devices on any interim hop in the downlink or uplink, or to the relay devices on the last hop in the uplink of the multi-hop relay network. According to the present invention, the signals sent from a relay device to other relay devices have undergone "processing using a specific information sequence processing method". Hence, after receiving each branch of signal sequence from other relay devices, the relay processing means 103 will perform cooperative detection and combination on the arrived branches of signal sequences, so as to generate a branch of signal sequence after cooperative detection and combination. Then, the relay station will perform signal regeneration process on the branch of signal sequence after cooperative detection and combination, so as to generate a signal sequence after signal regeneration. Consequently, the signal sequence after signal regeneration will be processed with a specific information sequence processing method.

### 4. The fore level network nodes are multiple relay devices, the next level network nodes is an MS.

As said in the contents above, the introduction of a RS is transparent to an MS. Therefore, the relay processing means 103 of a relay station on the last hop in downlink of the multi-hop relay network should perform cooperative detection and combination on the branches of signal sequences arrived to generate a signal sequence after cooperative detection and combination. Then, the relay processing means 103 will perform a signal regeneration process on the signal sequence after cooperative detection and combination so as to generate a signal sequence after signal regeneration. Different from the previous situation, the relay processing means 103 will not process the signal sequence with a specific information sequence processing method, but convert the format of the signal sequence to generate a signal sequence after signal format conversion. The format of the signal sequence after the conversion is the same as that of the signals that BS sends to a MS before the introduction of any RS.

The relay processes in the aforesaid situations 2-4 can be collectively called cooperative relay process.

The signals after one of the aforesaid four kinds of relay processes will be sent by a sending means 104 in the corresponding relay device to its next level network node(s).

Preferably, the relay device further comprises a judging means, for performing a check such as Cyclic Redundancy Check (CRC) to judge if it is necessary to do some follow-up process to the signals and then forward them.

Fig. 8 shows the flowchart of the method, in the base station in wireless network, for supporting the cooperative relay with multiple relay devices, according to an embodiment of the invention.

The method starts from the step S201. In the step S201, the BS receives the signals from its fore level network nodes. Since the present invention mainly concerns the circumstance in which relay is needed for the communication between an MS and a BS, the signals received by the BS belong to multiple relay devices, the method then enters the step S202.

In the step S202, the BS performs cooperative detection and combination on the multiple branches of signals received from the multiple relay devices, so as to generate a signal sequence after cooperative detection and combination.

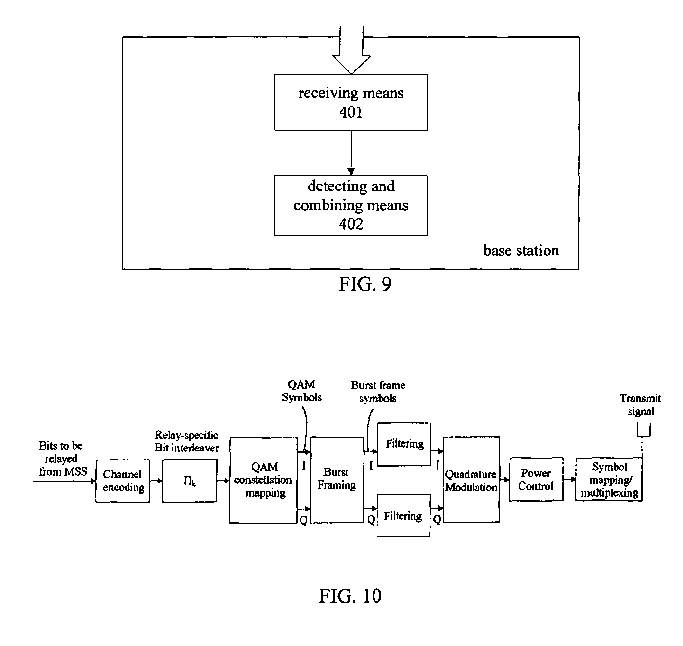

Fig. 9 is the diagram of the base station in wireless network for supporting the cooperative relay with multiple relay devices, according to an embodiment of the invention.

Wherein, the BS comprises a receiving means 401 and a detecting and combining means 402.

The receiving means 401 is for receiving the signals from the fore level network nodes. Since the present invention mainly concerns the circumstance in which relay is needed for the communication between a BS and an MS, the signals received by the BS belong to multiple relay devices. The receiving means 401 will convey the multiple branches of signals received to a detecting and combining means 402, the latter will perform cooperative detection and combination process on the multiple branches of signals, so as to generate a signal sequence after cooperative detection and combination.

Fig. 10 shows the process before a relay device sending signals on the uplink according to an embodiment of the invention.

Wherein, in a relay device there is a Relay-specific Bit interleaver. The interleaving manner used by the interleaver is different from the interleaving manner used by the interleavers in other relay devices. The interleaver is responsible for interleaving the encoded bit stream. Before the transmitting antennas, there is a Symbol mapping/multiplexing module, which is for mapping the symbols to the transmitting antennas, or for performing spatial multiplexing and then mapping the signals to multiple transmitting antennas. The kind of the gain the system can finally obtain depends on whether the signals that multiple relay devices send by using the same resource block (e.g. time and frequency) are the same. According to an embodiment of the invention, there are diversity gain and multiplexing gain.

Preferably, for the better performance, it is possible to add a module for spectrum spreading between the FEC (a kind of channel coding) module and the interleaving module, so as to achieve the spreading gain and speed match.

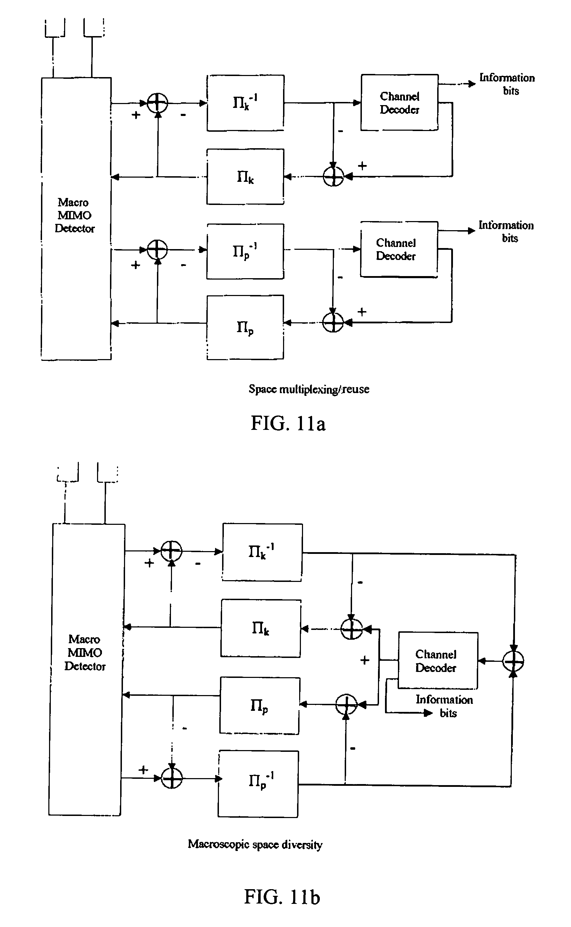

Fig. 11a and 11b show the course of, in the relay device or base station, processing the signals from multiple relay devices, according to an embodiment of the invention.

Wherein, the functions of MIMO and multi-use detection have been integrated in the Macro MIMO Detector (Macroscopic Multiple Input Multiple Output). After cooperative detection and combination, each of the interleavers and de-interleavers are in correspondence with a corresponding relay device, that is to say they have the same interleaving manner. The signals after combination will experience channel decoding in the Channel Decoder, so that the original signal sequence can be retrieved for follow-up operation.

Other means such as channel decoder can be standardized soft-in-soft-out detector.

Preferably, for the better performance (achieving spreading gain and speed match), a corresponding spreading (de-spreading) module can be added into the structure shown in the figure, for spreading gain and speed match.

Moreover, according to an embodiment of the invention, a relay device can be equipped with multiple transmitting antennas, two or more relay devices work cooperatively on the same level of the network by sharing radio resources.

Although the embodiments of the present invention have been described above, it is understandable by those skilled in the art that various modifications can be made without departing from the scope and spirit of the scope of the attached claims.

## Claims

1. A method, in a relay device in wireless communication network, for cooperative relay, comprising the steps of:
a. receiving the signals from the fore level network nodes;
b. according to the indicating information from a base station, determining the situations of the fore level network nodes and/or the next level network nodes;
c. according to the determination result, performing normal relay process or cooperative relay process on said signals from the fore level network nodes, so as to generate the signals after relay process;
d. sending the signals after relay process to the next level network nodes.

2. The method according to the claim 1, **characterized in that,** the step c comprises:
i. in case that said determination result shows that the fore level network node of said relay device is said base station and the next level network node of said relay device is a mobile station, performing normal relay process on the signals from said base station;
ii. otherwise, performing cooperative relay process on the signals from said fore level network nodes.

3. The method according to claim 2, **characterized in that,** in case that said determination result shows that said fore level network node is said mobile station or said base station, and the next level network nodes are multiple relay devices, said step ii comprises the steps of:
- performing signal regeneration process on said signals from the fore level network node, so as to generate a signal sequence after signal regeneration;
- processing said signal sequence after signal regeneration by using a specific information sequence processing method.

4. The method according to claim 2 or 3, **characterized in that,** in case that said determination result shows that said fore level network nodes comprise multiple relay devices, and the next level network nodes consist in multiple relay devices or a base station, said step ii comprises the following steps:
- performing cooperative detection and combination process on the branches of signal sequences from multiple fore level network nodes, so as to generate a signal sequence after cooperative detection and combination process;
- performing signal regeneration process on said signal sequence after cooperative detection and combination process, so as to generate a signal sequence after signal regeneration;
- processing said signal sequence after signal regeneration by using a specific information sequence processing method.

5. The method according to any of claims 2 to 4, **characterized in that,** in case that said determination result shows that said fore level network nodes are multiple relay devices, and the next level network node is said mobile station, said step ii comprises the steps of:
- performing cooperative detection and combination process on the branches of signal sequences from the fore level network nodes, so as to generate a signal sequence after cooperative detection and combination process;
- performing signal regeneration process on said signal sequence after cooperative detection and combination process, so as to generate a signal sequence after signal regeneration;
- converting the signal format of said signal sequence after signal regeneration, so as to generate a signal sequence after signal format conversion.

6. The method according to any of claims 2 to 5, **characterized in that,** in case that said determination result shows that said fore level network node is said base station, and the next level network node is a mobile station, said step i comprises:
- performing signal regeneration process on said signals from the fore level network nodes, so as to generate a signal sequence after signal regeneration;
- converting the signal format of said signal sequence after signal regeneration, so as to generate a signal sequence after signal format conversion.

7. The method according to any of claims 3 to 6, **characterized in that,** said information sequence processing method comprises signal interleaving method and signal scrambling method.

8. A relay device in wireless telecommunication network, for performing the cooperative relay, comprising:
receiving means, for receiving the signals from the fore level network nodes;
determining means, for according to the indicating information from a base station, determining the situations of the fore level network nodes and/or the next level network nodes;
relay processing means for, according to the determination result, performing the normal relay process or cooperative relay process on said signals from the fore level network nodes, so as to generate the signals after relay process;
sending means, for sending said signals after relay process to the next level network nodes.

9. The relay device according to claim 8, **characterized in that,** the relay processing means is further for:
- in case that said determination result shows that the fore level network node of said relay device is said base station and the next level network node of said relay device is a mobile station, performing normal relay process on the signals from said base station;
- otherwise, performing cooperative relay process on the signals from said fore level network nodes.

10. The relay device according to claim 9, **characterized in that,** in case that said determination result shows that said fore level network node is said mobile station or said base station, and the next level network nodes are multiple relay devices, said relay processing means is further for:
- performing signal regeneration process on said signals from the fore level network node, so as to generate a signal sequence after signal regeneration;
- processing said signal sequence after signal regeneration by using a specific information sequence processing method.

11. The relay device according to claim 9 or 10, **characterized in that,** in case that said determination result shows that said fore level network nodes comprise multiple relay devices, and the next level network nodes consist in multiple relay devices or a base station, the relay processing means is further for:
- performing cooperative detection and combination process on the branches of signal sequences from multiple fore level network nodes, so as to generate a signal sequence after cooperative detection and combination process;
- performing signal regeneration process on said signal sequence after cooperative detection and combination process, so as to generate a signal sequence after signal regeneration;
- processing said signal sequence after signal regeneration by using a specific information sequence processing method.

12. The relay device according to any of claims 9 to 11, **characterized in that,** in case that said determination result shows that the fore level network nodes of said relay device are multiple relay devices, and the next level network node is a mobile station, the relay processing means is further for:
- performing cooperative detection and combination process on the branches of signal sequences from said fore level network nodes, so as to generate a signal sequence after cooperative detection and combination process;
- performing signal regeneration process on said signal sequence after cooperative detection and combination process, so as to generate a signal sequence after signal regeneration;
- converting the signal format of said signal sequence after signal regeneration, so as to generate a signal sequence after signal format conversion.

13. The relay device according to any of claims 9 to 12, **characterized in that,** in case that said determination result shows that said fore level network node is said base station, and the next level network node is a mobile station, the relay processing mean is further for:
- performing signal regeneration process on said signals from the fore level network nodes, so as to generate a signal sequence after signal regeneration;
- converting the signal format of said signal sequence after signal regeneration, so as to generate a signal sequence after signal format conversion.

14. The relay device according to any of claims 9 to 13, **characterized in that,** said information sequence processing method comprises signal interleaving method and signal scrambling method.

15. A method, in the base station in wireless network, for supporting the cooperative relay with multiple relay devices, **characterized in** comprising the step of: performing cooperative detection and combination process on the branches of signals received from multiple relay devices, to generate a signal sequence after cooperative detection and combination process.

16. A base station in wireless network, for supporting the cooperative relay with multiple relay devices, **characterized in** comprising: a detecting and combining means, for performing cooperative detection and combination process on the branches of signals received from multiple relay devices, to generate a signal sequence after cooperative detection and combination process.
